## Europäisches Patentamt
## European Patent Office
## Office européen des brevets

(11) Publication number: **0 018 073**
A1

---

(12) ## EUROPEAN PATENT APPLICATION

(21) Application number: **80300716.0**

(22) Date of filing: **07.03.80**

(51) Int. Cl.³: **B 62 D 33/00,** B 60 P 7/04

---

(30) Priority: **07.03.79 GB 7908052**

(43) Date of publication of application: **29.10.80** Bulletin 80/22

(84) Designated Contracting States: **DE FR GB NL SE**

(71) Applicant: **Lawrence David Ltd., St. Peter's House 1 Bishops Road, Peterborough, PE1 1YE (GB)**

(72) Inventor: **Marshall, Lawrence, Piccadilly Farm Lutton, Peterborough (GB)**

(74) Representative: **Baillie, Iain C. et al, c/o Langner Parry Blumenstrasse 48, D-8000 München 2 (DE)**

---

(54) **Movable side curtains for freight containers.**

(57) The container is a box structure with two side curtains (1) which are movable up and down with a concertina action. The folds of each curtain (1) lie substantially parallel to the base of the container. The curtains have webbing strays (3) attached to drums (6) and a winding mechanism (19) which raises curtains (1) as webbing strays (3) wound onto drums (6).

0018073

TRANSPORTABLE FREIGHT CONTAINER

This invention relates to a transportable freight container by which is meant a motorised van of any size, an independent trailer construction on the chassis of which a superstructure is permanently fixed and which can be hitched to a "tractor" unit, or an independent container which may be temporarily mounted on a trailer, railway waggon, ship or lorry having a fixed chassis.

One known form of transportable freight container comprises a trailer chassis with a superstructure permanently mounted on the chassis. The container has a length of some 25 to 30 feet and is provided with a side roll curtain on each side extending over the length of the trailer. The curtain is mounted on the superstructure in such a way that a winding mechanism located at the front end of the trailer is operated to cause the curtain to roll onto a bar which extends over the full length of the trailer. However, such a construction has the disadvantages that rolling a single curtain over a length of 25 to 30 feet causes a great deal of stress to be applied to the bar on which the curtain is rolled and in addition the curtain is subject to excessive wear as dirt and grime on the exterior surface of the curtain is taken up into the rolled curtain between the turns of the roll and acts as an abrasive on the curtain.

These problems have been overcome to some extent by arranging that a curtain on such a container slides in a direction parallel to the base of the trailer chassis, the curtain being supported at least in a groove provided in the cant rail of the superstructure, that is, the upper edge support member which also extends in a direction parallel to the base of the trailer chassis. As the curtain slides it folds into a series of generally vertically extending pleats and consequently wear on the curtain caused by dirt and grime is reduced to a minimum. Although this construction has this advantage it also has the disadvantage of restricting access to goods which are located on the trailer, since the curtain when moved to one end takes up approximately one fifth of the length of the trailer. Furthermore, when the curtain is in its fully extended position it is tensioned at one or both ends by a vertical roller bar and then it is fastened along its bottom edge by a number of external straps. For example 21 straps may be used to hold the lower edge of the curtain over a length of some 25 feet. Accordingly, because of the tensioning of the fully secured curtain, to gain access to perhaps a front portion or rear portion of the trailer it has been found necessary to individually release substantially all the securing straps so that the curtain could be moved sufficiently to allow access as required; clearly this is a very time consuming operation.

It is an object of the present invention to provide a transportable freight container in which the above mentioned disadvantages are substantially alleviated.

According to the present invention there is provided a transportable freight container having one or more side curtains, in which each curtain is movable to allow access to the inside of the container by a concertina action in which the folds of the curtain lie in a direction substantially parallel to the base of the container.

Preferably the lower edge of the curtain is coupled to hoist hoisting means extending upwardly and being connected to drums at the top of the container. The drums are preferably interconnected by means of a bar extending the whole length of the trailer and being supported at suitable intervals by bushes. A winding mechanism is preferably located at one end of the container to rotate the bar and drums and hence raise or lower the curtain.

The winding mechanism may be operated manually by means of a handle located near the bottom edge of the container. The handle may be connected to a vertically extending shaft the free end of which is coupled by a gear mechanism to one end of the drum shaft. Alternatively, the handle may operate a winch with a wire cable or hemp or nylon rope extending upwardly to a pulley located on the end of the drum shaft. Other manual arrangements are of course possible such as a rachet or chain drive.

The winding mechanism may also take the form of an electrically driven motor or may be hydraulically driven. In either of these cases the drive mechanism may be located in the region of the drum shaft with suitable operating switches being located within reach of an operator at the bottom or lower edge of the container.

Preferably the hoisting means comprises a series of webbing strays each of which is coupled to the bottom of the curtain and onto the drums located at the top of the container behind the cant rail. The webbing strays preferably extend up the inside of the curtain through a series of loops located one above the other in a vertical direction up the curtain. Preferably the loops are defined by stiffening rods located in a sleeve stitched or welded to the inside of the curtain. The sleeve has a series of cut outs in which the stiffening rods are exposed and the webbing strays pass through the cut outs between the rod and the curtain. The loops may take the form of ties of nylon or other material attached to the curtain by stitching or welding. The webbing strays may be of nylon web of any thickness or may take the form of a wire cable or nylon or hemp rope.

In order to ensure the curtain can be easily lowered without a lowering drive a steel bar is located in the bottom edge of the curtain to give the curtain sufficient weight to lower itself when the winding mechanism holding the curtain at the top of the container is operated to allow the curtain to drop down.

At the bottom edge of the container there is an elongate support member known in the art as a side rave on which are provided a plurality of outwardly and downwardly extending lugs. The lower edge of the curtain is provided with cut outs with the steel rod exposed so that to attach the lower edge of the curtain to the side rave the steel rod is hooked underneath the lugs. By operating the winding mechanism the hoisting means can then be tensioned to secure the curtain. A portion of the curtain, over its length, is provided with resilient means attached to the inner surface of the curtain. The resilient means causes a bulge in the curtain so that when the curtain is about to be attached to the lugs an operator can pull the curtain down against the resilient means, straightening the bulge in the curtain and engage the lower edge of the curtain with the lugs whereupon the resilient means will hold the steel bar of the curtain in engagement with the lug prior to the tensioning of the hoisting means.

Preferably, at each end of the container there is provided a hinged plate to which is attached a rubber seal. The hinge is mounted on each corner support member of the container. The plate member is provided with an aperture which is engageable with an outwardly and upwardly extending lug projecting from the corner support member. To seal the edge of the curtain the plate is pivoted, lifted and the lug inserted through the aperture. The plate is then lowered to rest on the lug, which then serves to lock the plate in the sealing position. The rubber sealing portion of the plate extends over the edge of the curtain and seals the edge of the curtain.

An embodiment of the present invention will now be described by way of example with reference to the accompanying drawings, in which;

Figure 1 is a diagrammatic representation of part of a container in accordance with the present invention,

Figure 2 is a diagrammatic representation of one corner of a container and illustrates a manual winding mechanism,

Figure 3 is a diagrammatic view of a portion of a curtain when secured to a side rave of the container according to the present invention,

Figure 4 is a part sectional view of the side rave and curtain of Figure 3,

Figure 5 is a diagrammatic view of part of a curtain and closing plate for sealing the edges of the curtain, the plate being shown in a sealing position,

Figure 6 is a view similar to that of Figure 5 with the plate shown in an open or non sealing position,

Figure 7 is a perspective view of one form of container with the curtain raised, and

Figure 8 is a perspective view of the container of Figure 7 with the curtain closed.

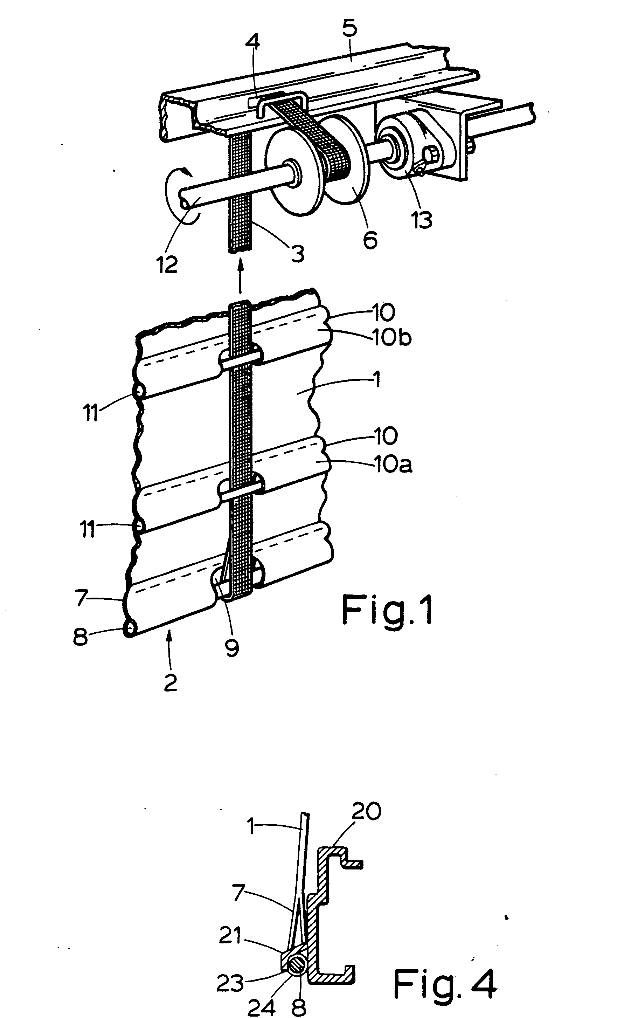

Referring now to the drawings and in particular to Figure 1 there is shown a portion of a transportable freight container having a curtain 1 which is formed from a 2 x 2 weave polyester cloth which is PVC coated and the bottom edge 2 of which is attached to a nylon webbing stray 3. The webbing stray 3 extends upwardly on the inside of the curtain through an elongate aperture 4 in an upper support member 5 formed by or in addition to the cant rail, and is connected to to a drum 6 located behind the cant rail. The curtain is fixed along its top edge to the support member or the cant rail.

The bottom edge of the curtain is defined by a loop or sleeve 7 through which passes a steel rod 8 which acts as a weight to assist in the lowering of the curtain as hereinafter described. The sleeve 7 is provided with cut outs 9 by means of which the rod 8 is exposed at various portions along its length. The webbing stray 3 is attached by means of a loop through which the rod 8 passes, to the rod in each cut out portion. It is envisaged that perhaps seven such webbing strays will be used along the length of a 25 foot curtain.

Fixed to the inside of the curtain by stitching or welding and extending across the curtain parallel to sleeve 7, are a plurality of further sleeves 10. Each sleeve has a rod 11 therein of lightweight material such as plastics and is provided with cut outs in the same manner as sleeve 7. In each case the webbing stray 3 passes between the plastic rods 11 and the curtain 1. The drum 6 on which the webbing stray is to be wound is connected to a drive shaft 12 which extends along the length of the container and which is supported intermittently by bearings 13.

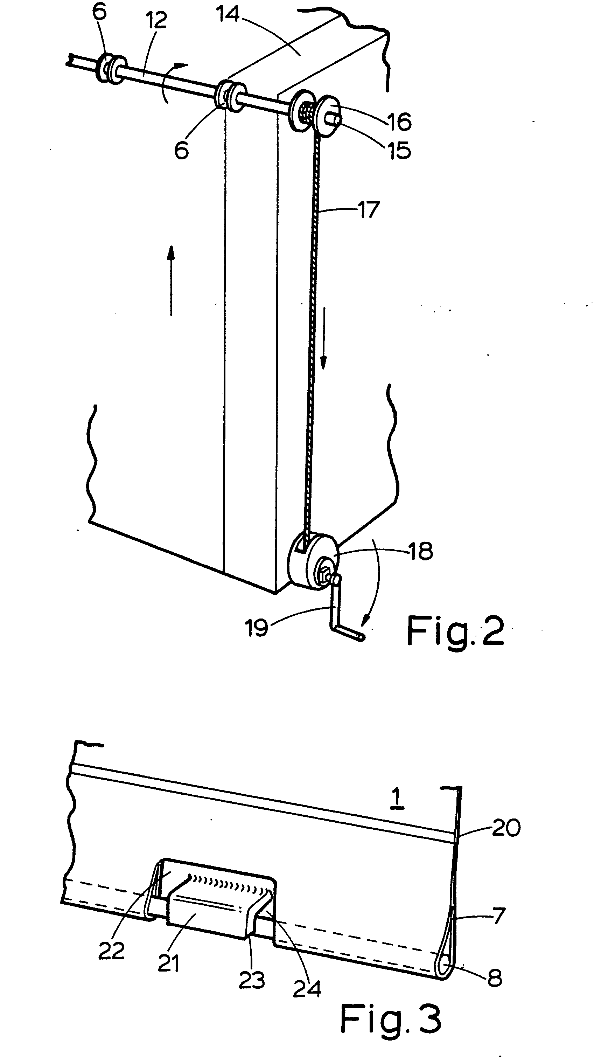

The drive shaft 12, Figure 2, passes through end wall 14 of the container and has on its free end 15 a pulley 16.. The drum drive shaft 12 is rotated by the unwinding of a cable 17 wound on to the pulley 16 by means of a winch 18 having a handle 19 and being located in the region of the lower end of the end wall 14 of the container.

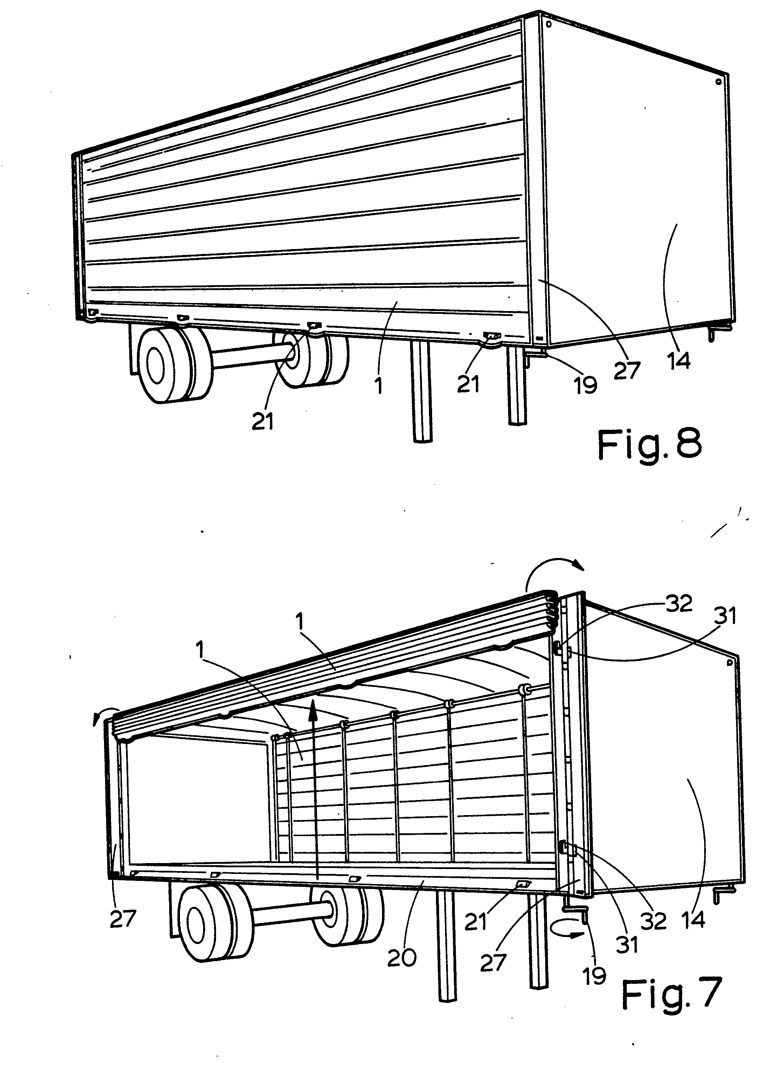

In the operation of winding up the curtain, the handle 19 is rotated and the drum drive shaft 12 rotates taking up the webbing stray 3 onto the drums 6. As the webbing strays move upwardly the rod 8 is pulled upwardly so that when it engages the next sleeve 10A a fold is produced in the curtain portion between the sleeves 7 and 10A. As the webbing strays continue to move upwardly the sleeves 7 and 10A move upwardly until together they engage the next sleeve 10B. Accordingly, a further fold is provided in the portion of the curtain between sleeves 10A and 10B. The curtain continues to move upwardly in this manner until the webbing strays 3 have raised the curtain to its maximum extent adjacent the container cant rail. The amount of room taken up by the concertinered curtain will be substantially the thickness of one of the sleeves 10 times the number of sleeves each of which extends across the curtain. As can be seen from the general view of a container in Figure 7 the concertinered curtain takes up a very small amount of the height of the container and leaves the whole length of the container exposed. In order to assist the movement of the webbing strays 3 each aperture 4 may have associated therewith a lubricated or nylon bush or a roller.

The winding down of the curtain is the reverse of the winding up of the curtain and therefore will not be further explained other than to say that the actual force which causes the curtain to lower is provided by the weight of the curtain,and in particular the steel rod 8. No positive winding down action is provided. although of course it could be possible to provide a positive wind down action if necessary. Any unwinding action of the winch serves only to control the rate at which the curtain drops or unwinds.

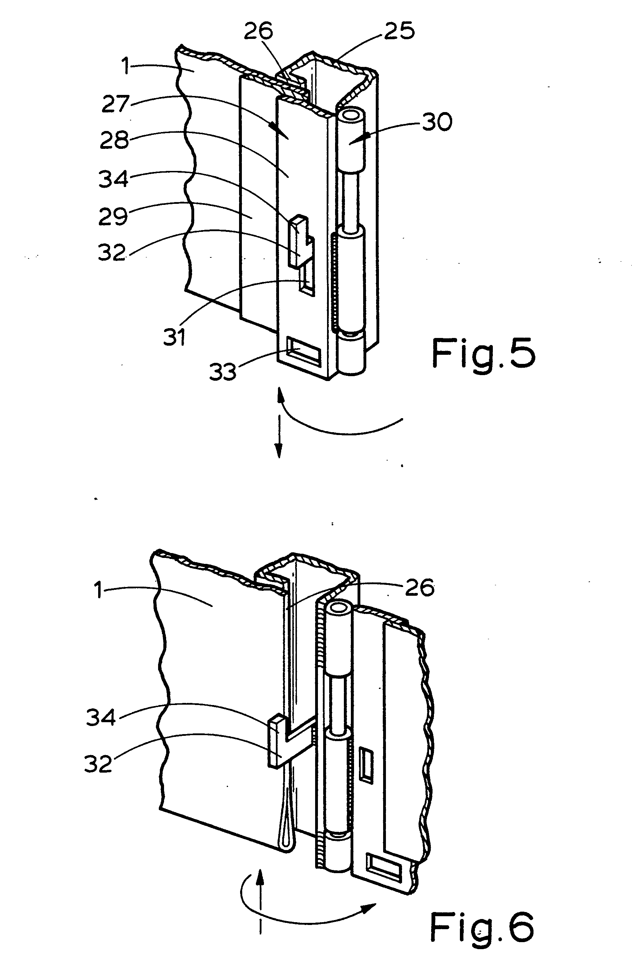

When the curtain is in its fully unwound position it is necessary to fix or secure the lower edge of the curtain and this action will now be described with reference to Figures 3 and 4. In Figure 3 there is shown a portion 20 of a side rave of the container and a portion of the curtain 1. At intervals along the length of the side rave there are provided outwardly and downwardly extending lugs 21 of which 4 are provided in the general views of the container in Figures 7 and 8. In addition to the cut out portions 9, the sleeve 7 is provided with further cut outs 22 in which the steel rod 8 is exposed. Furthermore, in a horizontal direction parallel to the sleeves 10 and not shown in the drawings the curtain is provided with a portion to which an elastic material is attached. The elasticity of the elastic material is such as to form a bulge extending parallel to the sleeves 10 across the curtain.

When the curtain is to be secured on the lugs 21 an operator simply holds the lower edge of the curtain and pulls it down against the force provided by the elastic material, thereby straightening the curtain and moving the rod 8 beneath lower edge 23 of the lug 21. This action may be accomplished either individually for each lug or by the operator standing centrally of the length of the curtain and pushing the steel rod downwardly and against the side rave 20. Upon the operator releasing the rod 8, the force of the elastic material causes the steel rod to enter space 24 between the lug 21 and side rave 20. To finally secure the curtain the winding mechanism can be operated to tension the webbing strays 3 which then serve to ensure security of the load within the container.

The elasticated material may form an actual part of the side curtain or may simply be a length of elastic material passing in a zig zag fashion through eyelets along the length of the curtain. Alternatively, the elasticated material may take the form of short straps fixed to an extending vertically of the curtain or may indeed be a strip of elastic material fixed along each of its elongate edges to the curtain.

0018073

When the container is being transported it is necessary to prevent the curtain billowing because of wind and the ingress of water along the vertical edge of the curtain. Accordingly, in the region of each vertical edge of the curtain there is provided a hinged closing plate which is diagrammatically represented in Figures 5 and 6 in closed and open positions respectively. Referring now particularly to these Figures there is shown a portion of a corner support 25 of the container which is overlapped by the generally vertically extending edge 26 of the curtain 1. The closing plate generally indicated by reference 27 comprises a metal strip portion 28 and a rubber strip portion 29 which is firmly secured to the portion 28 by any suitable means and extends from one edge of the metal portion as shown in Figure 5. The opposite edge of the metal portion 28 is provided with part of a hinge 30 of which the mating part is fixed to the corner support 25. The metal strip portion 28 is provided also with a vertically extending elongate aperture 31. The aperture 31 is located so as to co-operate with an outwardly and upwardly extending lug 32 projecting from the corner support 25. The closing plate is provided with a further aperture 33 which enables the closing plate to be firmly gripped in the movement of the closing plate between the positions shown in Figures 5 and 6.

Accordingly, when the side curtain has been secured to the lugs 21 on the side rave 20 of the container and the webbing strays 3 have been tensioned, the closure plate which is in the position shown in Figure 6 during raising and lowering of the curtain is pivoted about the hinge 30 towards the position shown in Figure 5 and simultaneously lifted so that the lug 32 passes through the aperture 31. The closing plate is then lowered so that it is locked in position behind the upwardly extending portion 34 of the lug 32. In the closed position the rubber portion 29 of the closing plate engages the edge region of the curtain and seals the curtain to prevent the curtain billowing and the ingress of water into the container. Although a single hinge has been shown in Figures 5 and 6 the closing plate will have at least one further hinge mounted on the corner support 25 in the region of the top of the container. Only one lug 32 on the support 25 and its associated aperture 31 need be provided although if necessary and as shown in the general view of Figure 7 two such lugs may be provided with their associated apertures in the closure plate.

As indicated in the above description Figures 7 and 8 show general views of a transportable freight container which is essentially a trailer chassis having a superstructure loacted thereon. These Figures show a winding mechansim which is located underneath the base of the trailer at the front end thereof. Such a winding mechanism may comprise an elongate shaft extending vertically from the handle to the top of the container where by means of a gearing mechanism the drum drive shaft can be driven. Figure 7 shows the curtain in its raised concertinered position taking up a relatively small amount of space alongside the cant rail of the container. Figure 8 shows the curtain in its lowered and fully secured position.

The transportable freight container can be made of a single and lightweight construction since the stresses of the known type elongate bar on which curtains are rolled are removed and the roof support members can be made of a light material since no stresses are applied. There is minimal wear and tear on the curtains because they fold rather than roll over a roller and there is built in load security with the load bearing webbing straps being located on the inside of the curtain and thereby being protected from external fork lift truck damage.

Although the container has been described for use with the curtains in their lowered position the container can be used with the curtain in its raised position when required.

In an alternative embodiment of a transportable freight container according to the present invention the curtain is fixed along its top edge to a support member which may be fixed to the cant rail. The cant rail itself may be of a flat bottomed U-shaped cross-section mounted on its side with one arm of the U being longer than the other to facilitate connection to the support member. The bearings for the drum drive shaft are mounted on the flat bottom portion of the cant rail so that the drum drive shaft extends along the cant rail.

Above each drum on the cant rail are located a pair of arms
extending from the flat bottom portion thereof and their free
ends support between them a pin or roller over which the webbing
strays pass prior to connection with the drums.

In yet another embodiment, the lugs on the side rave, to
which the lower edge of the curtain is attached, may be mounted on
the under surface of the side rave to define a hook the open end
of which is directed inwardly of the container. In addition each
webbing stray passes through a D-shaped ring provided in each cut
out exposing the steel rod at the bottom of the curtain. In operation ·
with the curtain in its lowered position the webbing strays are
pulled down and the D-ring passed under the side rave and onto the
lugs. The winding mechanism is then operated to move the webbing
strays upwardly. However, because the D-rings are attached to the
lugs thay are in a horizontal position and each presents itself as
a bush around which the respective webbing strays extend, upwardly
on one side to the cant rail and on the other side to the steel bar
at the bottom of the curtain. Therefore, as the winding mechanism
tensions the webbing strays the lower edge of the curtain is pulled
down towards the D-rings. With such a construction the elasticated
portion of the curtain can conveniently be omitted.

With such a curtain construction as just described, the
sealing plate along each vertical side edge of the curtain may take
the form of a pivotally mounted plate having in the region of its
lowermost end an arm pivotally mounted on the plate. When the
sealing plate is positioned to seal the edge of the curtain and the
adjacent webbing stray is pulled down to locate the D-ring on its
respective lug, the arm attached to the sealing plate is located
above the D-ring between the two upwardly extending portions of the
webbing stray. Accordingly, as the webbing strays are tensioned and
the lower edge of the curtain pulled downwardly, the arm attached
to the sealing plate is held more securely ensuring the sealing plate
also remains securely in place. This construction has the advantage of
eliminating the need to provide the locking arrangement previously
described for the sealing plate.

WHAT WE CLAIM IS:

1.        A transportable freight container having one or more
side curtains, in which each curtain is movable to allow access
to the inside of the container by a concertina action in which the
folds of the curtain lie in a direction substantially parallel to
the base of the container.

2.        A container as claimed in claim 1, further comprising
hoisting means coupled to the lower edge of the curtain, the
hoisting means extending upwardly and being connected to drums
at the top of the container.

3.        A  container as claimed in claim 2, wherein the hoisting
means comprises a series of webbing strays each of which is coupled
to the bottom of the curtain and on to the drums located at the
top of the container.

4.        A container as claimed in claim 3, wherein the webbing
strays extend up the inside of the curtain through a series of loops
located one above the other in a vertical direction up the curtain.

5.        A container as claimed in any one of the preceeding
claims further comprising a winding mechanism located at one end
of the container.

6.        A container as claimed in claim 5, wherein the winding
mechanism is an electrically driven motor.

7.        A container as claim 5 or claim 6, further comprising
a steel bar located in the bottom edge of the curtain to bias
the curtain downwardly when the winding mechanism holding the
curtain at the top of the container is operated to allow the curtain
to drop down.

8.      A container as claimed in any one of the preceeding claims, further comprising a plurality of lugs located on a side rave of the container for securing the lower edge of the curtain to the side rave.

9.·     A container as claimed in claim 8, further comprising resilient means attached to the inner surface of the curtain for holding the lower edge of the curtain in engagement with the lugs prior to tensioning of the hoisting means.

10.     A container as claimed in any one of the preceeding claims, further comprising a sealing plate mounted on a corner support member of the container and securing means associated with the sealing plate for securing the sealing plate against the respective vertical edge of the curtain.

Fig.1

Fig. 4

0018073

Fig.2

Fig.3

Fig.5

Fig.6

0018073

Fig. 8

Fig. 7

European Patent Office

**EUROPEAN SEARCH REPORT**

0018073

Application number

EP 80 30 0716

| | DOCUMENTS CONSIDERED TO·BE RELEVANT | | CLASSIFICATION OF THE APPLICATION (Int. Cl.3) |
|---|---|---|---|
| Category | Citation of document with indication, where appropriate, of relevant passages | Relevant to claim | |
| X | US - A - 4 092 039 (LUTKENHOUSE)<br>* entire document *<br>-- | 1-3,6 | B 62 D 33/00<br>B 60 P 7/04 |
| | US - A - 3 292 971 (ZUCKER)<br>* fig. 11 to 19 *<br>-- | 1,2,5,<br>6 | |
| | FR - A - 2 190 634 (WEEKS & CO.)<br>* page 3, lines 30 to 37; fig. 1, 2 *<br>-- | 1,7,8 | TECHNICAL FIELDS SEARCHED (Int.Cl.3) |
| | GB - B - 1 262 879 (BOALLOY)<br>* fig. 4 *<br>--- | 4 | B 60 P 3/025<br>B 60 P 7/00<br>B 62 D 33/00 |
| A | GB - A - 1 521 466 (CRANE FRUEHAUF)<br>-- | | |
| A | FR - A1 - 2 352 689 (LALOYEAU)<br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 12-05-1980 | LUDWIG |

EPO Form 1503.1 06.78